Europäisches Patentamt

European Patent Office

Office européen des brevets

(11) Publication number: **0 339 865**
**A2**

## EUROPEAN PATENT APPLICATION

(21) Application number: **89303922.2**

(51) Int. Cl.⁴: **G02B 17/00 , G02B 19/00**

(22) Date of filing: **20.04.89**

(30) Priority: **28.04.88 IL 86224**

(43) Date of publication of application:
**02.11.89 Bulletin 89/44**

(84) Designated Contracting States:
**AT BE CH DE ES FR GB GR IT LI LU NL SE**

(71) Applicant: **ALUMOR LASERS LTD.**
**Science-Based Industrial Park P.O. Box 23898**
**Jerusalem(IL)**

(72) Inventor: **Brestel, Mordechai**
**14 Harav Sheeber Street**
**Rehovot(IL)**
Inventor: **Nissim Ben-Yosef**
**13 Hasatat Street**
**Jerusalem(IL)**
Inventor: **Goldenberg , Ephraim**
**9, Shmariyahu Levine Street**
**Tel Aviv(IL)**

(74) Representative: **Hillier, Peter et al**
**Reginald W. Barker & Co., 13, Charterhouse Square**
**London, EC1M 6BA(GB)**

(54) **Apparatus for configuring optical radiation.**

(57) Apparatus for configuring radiation having an annular character and comprising a unitary optical substrate (10) having formed thereon at least first and second optical surfaces (16, 18), at least one of which is non-linear, each having rotational symmetry, the first and second optical surfaces (16, 18) being defined in three dimensions by an analytical expression.

FIG. 1

EP 0 339 865 A2

## APPARATUS FOR CONFIGURING OPTICAL RADIATION

### FIELD OF THE INVENTION

The present invention relates to beam shaping and more particularly to shaping and measurement of radiation having an annular character.

### BACKGROUND OF THE INVENTION

In an article entitled "The Reflaxicon, a New Reflective Optical Element, and Some Applications" by W.R. Edmonds, in Applied Optics, Vol. 12, No. 8, August 1973, pp. 1940 - 1944, there is described a reflaxicon, a two stage axiconic reflector which consists essentially of first and second separate coaxial linear conical mirrors for concentrating and collimating annular beams.

The reflaxicon described in the above publication provides a relatively low power density in the beam waist. Additionally, due to the design of the conical mirrors, they cannot be rigidly joined without interfering with the radiation passing therethrough.

In an article entitled "The Parabolic Axicon" by George S. Bakken, Applied Optics, Vol. 13, No.6, June 1974, pp 1291 -1291, there is described a two-stage axicon including one off-axis parabolic reflecting surface and a second linear conical surface. The two elements of this structure, similarly to that described by Edmonds, cannot be rigidly joined without interfering with the radiation passing therethrough.

The use of precision machined optical elements, such as diamond turned elements, for laser beam shaping is described in the following articles: "Laser Resonator Applications of Precision Machined Nonconventional Shaped Optics" by Jack Hanlon and Jim Engel, SPIE Vol 93 Advances in Precision Machining of Optics (1976), pp. 11 - 15, "Design and Fabrication of a Nonlinear Waxicon", by Dennis N. Mansell and T.T. Saito, SPIE Vol 93 Advances in Precision Machining of Optics (1976), pp. 16 - 22, "Design and Fabrication of a Nonlinear Waxicon" by Dennis N. Mansell and T.T. Saito, Optical Engineering, Vol. 16 No. 4, July-August 1977, pp. 355 - 359. The latter two articles deal with numerically designed optical surfaces. All three of the abovementioned articles deal only with collimation.

In a report entitled "A Waxicon Design Code for Arbitrary Input-Output Intensity Distributions" by E. A. Aronson, L. A. Romero and A. H. Treadway, identified as SAN D86-0770 NTIS No. DE 86011999, there is described a numerical design technique for producing a Waxicon which provides a desired output intensity distribution for an annular shaped beam having any input intensity distribution. The output intensity distribution may be concentrated to any desired distance or collimated. The design is expressly restricted to configurations wherein the input and output rays are 180 degrees apart.

### SUMMARY OF THE INVENTION

The present invention seeks to provide improved apparatus for shaping and measurement of radiation which overcomes limitations of the prior art.

There is thus provided in accordance with a preferred embodiment of the present invention, apparatus for configuring radiation having an annular character and comprising a unitary optical substrate having formed thereon at least first and second optical surfaces, at least one of which is non-linear, each having rotational symmetry, the first and second optical surfaces being defined in three dimensions by an analytical expression.

Additionally in accordance with this preferred embodiment of the invention, the optical substrate is formed therein an aperture permitting passage therethrough of radiation.

Additionally in accordance with a preferred embodiment of the invention the apparatus for configuring also comprises a folding mirror arranged for reflection of light passing through said aperture in a desired direction.

Further in accordance with a preferred embodiment of the invention, the folding mirror has optical power. According to an alternative embodiment of the invention, the folding mirror is flat.

Further in accordance with a preferred embodiment of the invention, the aperture is arranged to be coaxial with the first and second optical surfaces.

In accordance with the above preferred embodiment of the invention, the first and second optical surfaces are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Further in accordance with another preferred embodiment of the invention, there is provided apparatus for configuring radiation having an annular character and comprising a unitary optical substrate having formed thereon at least first and second optical surfaces, the first and second optical surfaces being defined in three dimensions by the numerical solutions to differential equations, said optical substrate having formed therein an aperture permitting passage therethrough of radiation.

Additionally in accordance with a preferred embodiment of the invention the apparatus for configuring also comprises a folding mirror arranged for reflection of light passing through said aperture in a desired direction.

Further in accordance with a preferred embodiment of the invention, the folding mirror has optical power. According to an alternative embodiment of the invention, the folding mirror is flat.

Further in accordance with a preferred embodiment of the invention, the aperture is arranged to be coaxial with the first and second optical surfaces.

The first and second optical surfaces may be coated with a reflective and/or protective coating or uncoated. When uncoated surfaces are employed, the substrate should be formed of a material, which is highly reflective after being diamond turned, such as aluminum or copper alloys.

In accordance with a preferred embodiment of the invention, the apparatus for configuring is operative to collimate incoming radiation. In accordance with an alternative preferred embodiment of the invention, the apparatus for configuring is operative to concentrate incoming radiation. Further in accordance with an embodiment of the invention, the apparatus is operative for performing any other suitable configuration of incoming radiation, including, for example, changing its power density distribution.

Additionally in accordance with a preferred embodiment of the invention there is provided apparatus for configuring radiation comprising a unitary optical substrate having formed thereon at least first and second optical surfaces, at least one of which is non-linear, each having rotational symmetry about an axis of symmetry, said first and second optical surfaces being arranged such that radiation reflected from one of the first and second optical surfaces does not impinge on the other of the first and second optical surfaces at said axis of symmetry.

## BRIEF DESCRIPTION OF THE DRAWINGS

The present invention will be understood and appreciated more fully from the following detailed description taken in conjunction with the drawings in which:

Fig. 1 is a sectional illustration of apparatus for configuring radiation including an aperture and a folding mirror in accordance with a preferred embodiment of the invention;

Fig. 2 is a sectional illustration of apparatus for configuring radiation including an aperture and a folding mirror in accordance with another preferred embodiment of the invention;

Fig. 3 is a sectional illustration of apparatus for configuring radiation including an aperture in accordance with yet another preferred embodiment of the invention;

Fig. 4 is a sectional illustration of apparatus for configuring radiation including an aperture in accordance with still another preferred embodiment of the invention;

Fig. 5 is a sectional illustration of apparatus for configuring radiation including an aperture similar to that of Fig. 4 and in accordance with a further preferred embodiment of the invention;

Fig. 6 is a sectional illustration of apparatus for configuring radiation while maintaining its collimation in accordance with a still further preferred embodiment of the present invention; and

Fig. 7 is a sectional illustration of apparatus for configuring radiation in accordance with yet a further preferred embodiment of the present invention.

## DETAILED DESCRIPTION OF THE INVENTION

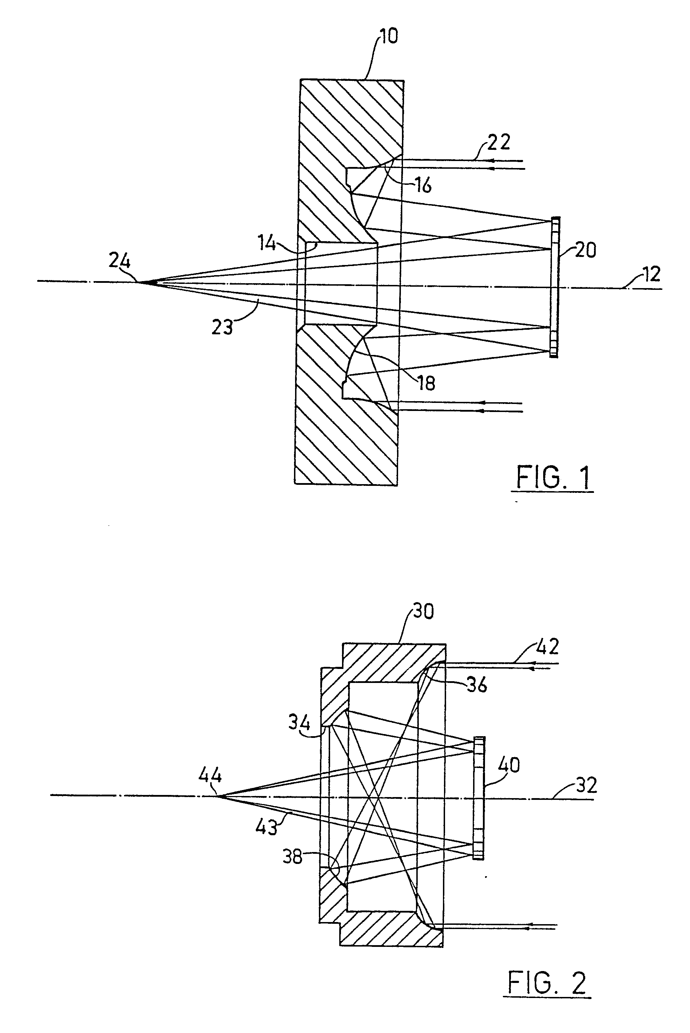

Reference is now made to Fig. 1, which illustrates apparatus for configuring radiation including an aperture and a folding mirror in accordance with a preferred embodiment of the invention. The apparatus of Fig. 1 comprises a substrate 10 of generally disk-like configuration which has rotational symmetry about an axis 12. Substrate 10 is formed with a central, axial bore 14.

Formed on substrate 10 is a first rotationally symmetric curved convex reflecting surface 16 and disposed axially interiorly with respect to surface 16 is a second rotationally symmetric curved concave reflecting surface 18.

Alternatively, the first surface 16 may be located axially interiorly of surface 18 instead of as shown.

A folding mirror 20 is disposed axially offset from surfaces 16 and 18 and in reflecting relationship with surface 18. In the illustrated embodiment, the folding mirror 20 is flat. Alternatively it may have optical power. According to a further alternative embodiment of the invention, the folding mirror 20 may be eliminated.

In the illustrated embodiment, an annular beam of radiation, such as that provided by a laser described in our U.S. Patent Application, Serial No. 135,384, filed December 21, 1987, impinges on surface 16, as indicated by reference numeral 22. The annular beam is reflected by surface 16 onto surface 18 and thence, preferably via folding mirror 20, as an output beam 23 to a focus 24 or other concentration location which may be a point location or a more spread out location.

In accordance with one embodiment of the invention, both surfaces 16 and 18 are defined in three dimensions by an analytical expression. This is a particular feature of the present invention, inasmuch as it enables improved optical design which overcomes difficulties encountered in production of numerical designs.

Alternatively both surfaces 16 and 18 are defined by the numerical solutions to differential equations. According to a further alternative embodiment of the invention, one of the surfaces 16 and 18 may be defined in three dimensions by an analytical expression and the other may be defined by the solution to differential equations.

In accordance with the above preferred embodiment of the invention, the first and second optical surfaces 16 and 18 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 16 and 18 are preferably configured to have a common focus, which need not necessarily be real.

It is a particular feature of the embodiment of Fig. 1 that bore 14 is provided. The provision of bore 14 enables the output beam 23 to be transmitted axially in the same direction as input beam 22. The provision of bore 14 also eliminates problems associated with high power density in the vicinity of the axis of rotational symmetry 12 as encountered in the prior art which does not provide such a bore.

Reference is now made to Fig. 2, which illustrates apparatus for configuring radiation including an aperture and a folding mirror in accordance with a preferred embodiment of the invention. The apparatus of Fig. 2 comprises a substrate 30 of generally disk-like configuration which has rotational symmetry about an axis 32. Substrate 30 is formed with a central, axial opening 34.

Formed on substrate 30 is a first rotationally symmetric curved concave reflecting surface 36 and disposed axially interiorly with respect to surface 36 is a second rotationally symmetric curved concave reflecting surface 38.

Alternatively, the first surface 36 may be located axially interiorly of surface 38 instead of as shown.

A folding mirror 40 is disposed axially offset from surfaces 36 and 38 and in reflecting relationship with surface 38. In the illustrated embodiment, the folding mirror 40 is flat. Alternatively it may have optical power. According to a further alternative embodiment of the invention, the folding mirror 40 may be eliminated.

In the illustrated embodiment, an annular beam of radiation, such as that provided by a laser described in our U.S. Patent Application, Serial No. 135,384, filed December 21, 1987, impinges on surface 36, as indicated by reference numeral 42. The annular beam is reflected by surface 36 onto surface 38 and thence, preferably via folding mirror 40, as an output beam 43 to a focus 44 or other concentration location which may be a point location or a more spread out location.

In accordance with one embodiment of the invention, both surfaces 36 and 38 are defined in three dimensions by an analytical expression. This is a particular feature of the present invention, inasmuch as it enables improved optical design which overcomes difficulties encountered in production of numerical designs.

Alternatively both surfaces 36 and 38 are defined by the numerical solutions to differential equations.

According to a further alternative embodiment of the invention, one of the surfaces 36 and 38 may be defined in three dimensions by an analytical expression and the other may be defined by the solution to differential equations.

In accordance with the above preferred embodiment of the invention, the first and second optical surfaces 36 and 38 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 36 and 38 are preferably configured to have a common focus which need not necessarily be real.

It is a particular feature of the embodiment of Fig. 2 that opening 34 is provided. The provision of opening 34 enables the output beam 43 to be transmitted axially in the same direction as input beam 42. The provision of opening 34 also eliminates problems associated with high power density in the vicinity of the axis of rotational symmetry 32 as encountered in the prior art which does not provide such an opening.

The embodiment of Fig. 2 differs from the embodiment of Fig. 1 in the curvature of surface 36. While in the embodiment of Fig. 1 the common focus of surfaces 16 and 18 is imaginary, in the embodiment of Fig. 2, the common focus of surfaces 36 and 38 is real.

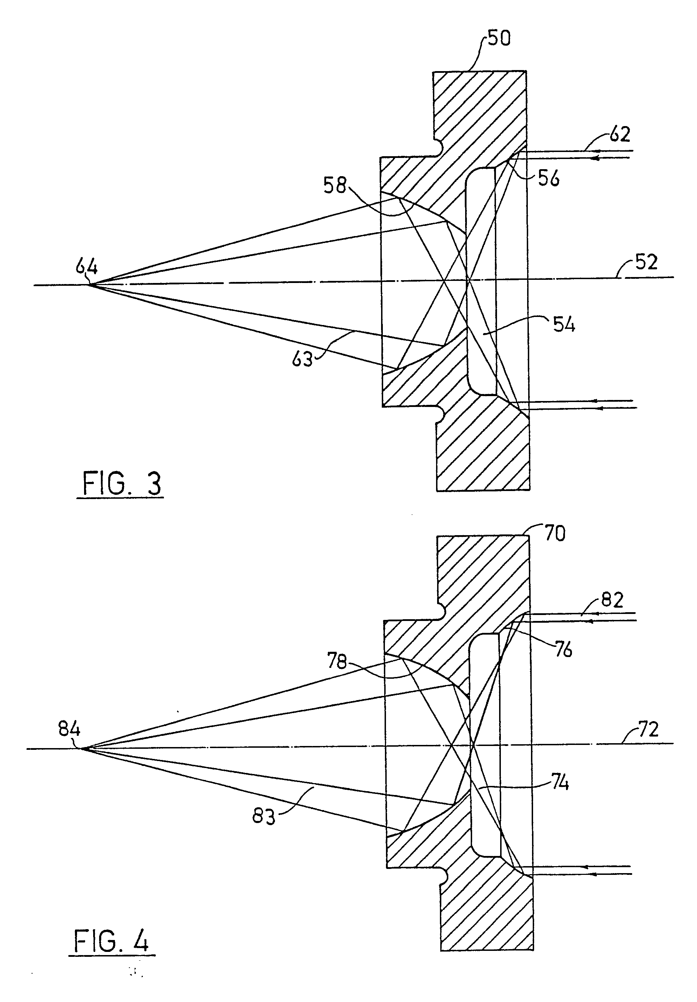

Reference is now made to Fig. 3, which illustrates apparatus for configuring radiation including an opening in accordance with a preferred embodiment of the invention. The apparatus of Fig. 3 comprises a substrate 50 of generally disk-like configuration which has rotational symmetry about an axis 52. Substrate 50 is formed with a central, axial opening 54.

Formed on substrate 50 is a first rotationally symmetric curved convex reflecting surface 56 and disposed axially interiorly with respect to surface 56 is a second rotationally symmetric curved concave reflecting surface 58.

Alternatively, the first surface 56 may be located axially interiorly of surface 58 instead of as shown.

In the illustrated embodiment, an annular beam of radiation, such as that provided by a laser described in our U.S. Patent Application, Serial No. 135,384, filed December 21, 1987, impinges on surface 56, as indicated by reference numeral 62. The annular beam is reflected by surface 56 onto surface 58 and then is reflected in a forward direction as an output beam 63 to a focus 64 or other concentration location which may be a point location or a more spread out location.

In accordance with one embodiment of the invention, both surfaces 56 and 58 are defined in three dimensions by an analytical expression. This is a particular feature of the present invention, inasmuch as it enables improved optical design which overcomes difficulties encountered in production of numerical designs.

Alternatively both surfaces 56 and 58 are defined by the numerical solutions to differential equations. According to a further alternative embodiment of the invention, one of the surfaces 56 and 58 may be defined in three dimensions by an analytical expression and the other may be defined by the solution to differential equations.

In accordance with the above preferred embodiment of the invention, the first and second optical surfaces 56 and 58 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 56 and 58 are preferably configured to have a common focus, which need not necessarily be real.

It is a particular feature of the embodiment of Fig. 3 that opening 54 is provided. The provision of opening 54 enables the output beam 63 to be transmitted axially in the same direction as input beam 62.

Reference is now made to Fig. 4, which illustrates apparatus for configuring radiation including an opening in accordance with a preferred embodiment of the invention. The apparatus of Fig. 4 comprises a substrate 70 of generally disk-like configuration which has rotational symmetry about an axis 72. Substrate 70 is formed with a central, axial opening 74.

Formed on substrate 70 is a first rotationally symmetric curved concave reflecting surface 76 and disposed axially interiorly with respect to surface 76 is a second rotationally symmetric curved concave reflecting surface 78.

Alternatively, the first surface 76 may be located axially interiorly of surface 78 instead of as shown.

In the illustrated embodiment, an annular beam of radiation, such as that provided by a laser described in our U.S. Patent Application, Serial No. 135,384, filed December 21, 1987, impinges on surface 76, as indicated by reference numeral 82. The annular beam is reflected by surface 76 onto surface 78 and then is reflected in a forward direction as an output beam 83 to a focus 84 or other concentration location which may be a point location or a more spread out location.

In accordance with one embodiment of the invention, both surfaces 76 and 78 are defined in three dimensions by an analytical expression. This is a particular feature of the present invention, inasmuch as it enables improved optical design which overcomes difficulties encountered in production of numerical designs.

Alternatively both surfaces 76 and 78 are defined by the numerical solutions to differential equations. According to a further alternative embodiment of the invention, one of the surfaces 76 and 78 may be defined in three dimensions by an analytical expression and the other may be defined by the solution to differential equations.

In accordance with the above preferred embodiment of the invention, the first and second optical surfaces 76 and 78 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 76 and 78 are preferably configured to have a common focus which need not necessarily be real.

It is a particular feature of the embodiment of Fig. 4 that opening 74 is provided. The provision of opening 74 enables the output beam 83 to be transmitted axially in the same direction as input beam 82.

The embodiment of Fig. 4 differs from the embodiment of Fig. 3 in the curvature of surface 76. While in the embodiment of Fig. 3 the common focus of surfaces 56 and 58 is imaginary, in the embodiment of Fig. 4, the common focus of surfaces 76 and 78 is real.

The embodiments of Figs. 3 and 4 differ from those of Figs. 1 and 2 in that no folding mirror is required for forward reflection.

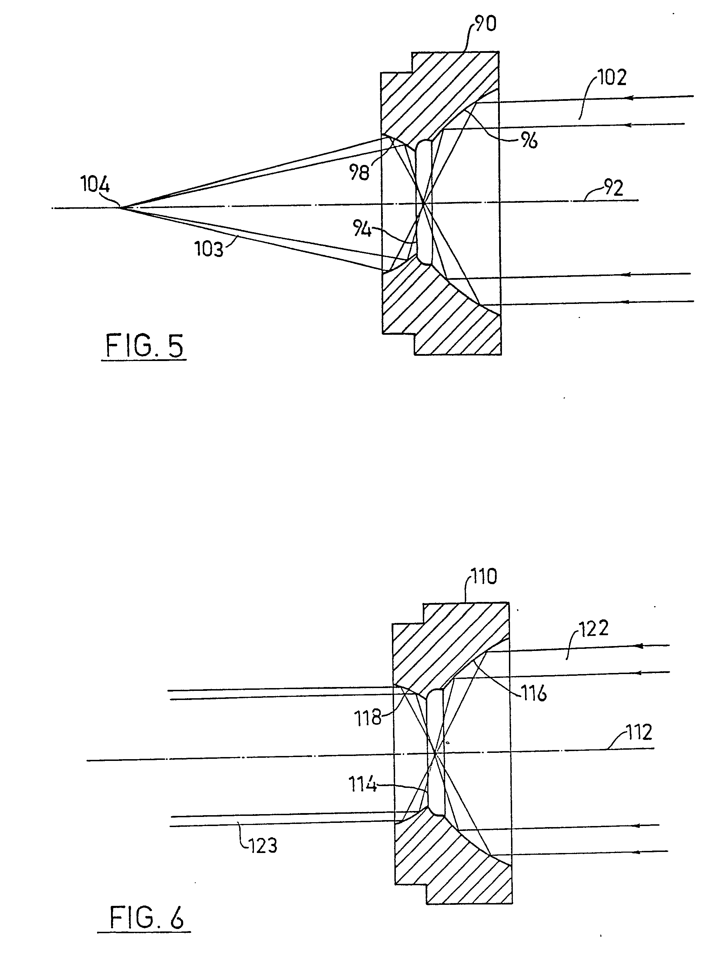

Reference is now made to Fig. 5, which illustrates apparatus for configuring radiation including an opening in accordance with a preferred embodiment of the invention. The apparatus of Fig. 5 comprises a substrate 90 of generally disk-like configuration which has rotational symmetry about an axis 92. Substrate 90 is formed with a central, axial opening 94.

Formed on substrate 90 is a first rotationally symmetric curved concave reflecting surface 96 and disposed axially interiorly with respect to surface 96 is a second rotationally symmetric curved concave reflecting surface 98.

Alternatively, the first surface 96 may be located axially interiorly of surface 98 instead of as shown.

In the illustrated embodiment, an annular beam of radiation, such as that provided by a laser Model No. ML-108 manufactured by MLI Lasers of Atidim Industrial Park, Tel Aviv, Israel, impinges on surface 96, as indicated by reference numeral 102. The annular beam is reflected by surface 96 onto surface 98 and then is reflected in a forward direction as an output beam 103 to a focus 104 or other concentration location which may be a point location or a more spread out location.

In accordance with one embodiment of the invention, both surfaces 96 and 98 are defined in three dimensions by an analytical expression. This is a particular feature of the present invention, inasmuch as it enables improved optical design which overcomes difficulties encountered in production of numerical designs.

Alternatively both surfaces 96 and 98 are defined by the numerical solutions to differential equations. According to a further alternative embodiment of the invention, one of the surfaces 96 and 98 may be defined in three dimensions by an analytical expression and the other may be defined by the solution to differential equations.

In accordance with the above preferred embodiment of the invention, the first and second optical surfaces 96 and 98 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 96 and 98 are preferably configured to have a common focus which need not necessarily be real.

It is a particular feature of the embodiment of Fig. 5 that opening 94 is provided. The provision of opening 94 enables the output beam 103 to be transmitted axially in the same direction as input beam 102.

A principal difference between the embodiments of Figs. 4 and 5 is that the aspect ratio of the impinging beam in Fig. 5 is broader than that in the embodiment of Fig. 4, although it is noted that the drawings throughout are not necessarily to scale.

Reference is now made to Fig. 6, which illustrates apparatus for configuring radiation including an

6

opening in accordance with a preferred embodiment of the invention. The apparatus of Fig. 6 comprises a substrate 110 of generally disk-like configuration which has rotational symmetry about an axis 112. Substrate 110 is formed with a central, axial opening 114.

Formed on substrate 110 is a first rotationally symmetric curved concave reflecting surface 116 and disposed axially interiorly with respect to surface 116 is a second rotationally symmetric curved concave reflecting surface 118.

Alternatively, the first surface 116 may be located axially interiorly of surface 118 instead of as shown.

In the illustrated embodiment, an annular beam of radiation, such as that provided by a laser Model No. ML-108 manufactured by MLI Lasers of Atidim Industrial Park, Tel Aviv, Israel, impinges on surface 116, as indicated by reference numeral 122. The annular beam is reflected by surface 116 onto surface 98 and then is reflected in a forward direction as a collimated output beam 123. The collimated beam represents a special case of focus of the output beam 123 to infinity.

In accordance with one embodiment of the invention, both surfaces 116 and 118 are defined in three dimensions by an analytical expression. This is a particular feature of the present invention, inasmuch as it enables improved optical design which overcomes difficulties encountered in production of numerical designs.

Alternatively both surfaces 116 and 118 are defined by the numerical solutions to differential equations. According to a further alternative embodiment of the invention, one of the surfaces 116 and 118 may be defined in three dimensions by an analytical expression and the other may be defined by the solution to differential equations.

In accordance with the above preferred embodiment of the invention, the first and second optical surfaces 116 and 118 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 116 and 118 are preferably configured to have a common focus which need not necessarily be real.

It is a particular feature of the embodiment of Fig. 6 that opening 114 is provided. The provision of opening 114 enables the collimated output beam 123 to be transmitted axially in the same direction as input beam 122.

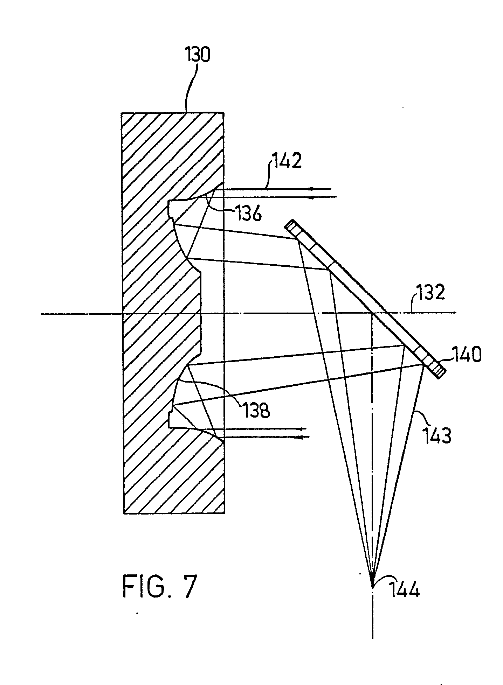

Reference is now made to Fig. 7, which illustrates apparatus for configuring radiation including a folding mirror but not including an aperture in accordance with an alternative preferred embodiment of the invention. The apparatus of Fig. 7 comprises a substrate 130 of generally disk-like configuration which has rotational symmetry about an axis 132.

Formed on substrate 130 is a first rotationally symmetric curved convex reflecting surface 136 and disposed axially interiorly with respect to surface 136 is a second rotationally symmetric curved concave reflecting surface 138.

Alternatively, the first surface 136 may be located axially interiorly of surface 138 instead of as shown.

A folding mirror 140 is disposed axially offset from surfaces 136 and 138 and in reflecting relationship with surface 138. In the illustrated embodiment, the folding mirror 140 is flat. Alternatively it may have optical power. According to a further alternative embodiment of the invention, the folding mirror 140 may be eliminated.

In the illustrated embodiment, an annular beam of radiation, such as that provided by a laser described in our U.S. Patent Application, Serial No. 135,384, filed December 21, 1987, impinges on surface 136, as indicated by reference numeral 142. The annular beam is reflected by surface 136 onto surface 138 and thence, preferably via folding mirror 140 as an output beam 143 to a focus 144 or other concentration location which may be a point location or a more spread out location.

In accordance with one embodiment of the invention, both surfaces 136 and 138 are defined in three dimensions by an analytical expression. This is a particular feature of the present invention, inasmuch as it enables improved optical design which overcomes difficulties encountered in production of numerical designs.

Alternatively both surfaces 136 and 138 are defined by the numerical solutions to differential equations. According to a further alternative embodiment of the invention, one of the surfaces 136 and 138 may be defined in three dimensions by an analytical expression and the other may be defined by the solution to differential equations.

In accordance with the above preferred embodiment of the invention, the first and second optical surfaces 136 and 138 are characterized in that a section thereof taken in a plane passing through the axis of rotational symmetry is a curve selected from among elliptical, parabolic and hyperbolic curves. The sections of the first and second optical surfaces taken in a plane passing through their axes of rotational symmetry may be approximated by circular curves.

Surfaces 136 and 138 are preferably configured to have a common focus, which need not necessarily be real.

It is a particular feature of the embodiment of Fig. 7 that surfaces 136 and 138 are configured such that the radiation reflected from surface 136 onto surface 138 does not impinge on surface 138 in the vicinity of the axis of rotational symmetry 132. This may be accomplished using conventional optical design software, such as that appended hereto in Annex A. This feature eliminates problems associated with high power density in the vicinity of the axis of rotational symmetry 132 as encountered in the prior art.

The embodiment of Fig. 7 may be generalized to any of the variations illustrated in Figs. 2 - 6. For example, surface 136 may be concave instead of convex.

It will be appreciated that by suitable configuration of the first and second reflecting surfaces in all of the embodiments shown in Figs. 1 - 5 and 7, a collimated output beam may be produced.

The first and second reflecting surfaces are preferably defined by conventional optical diamond turning techniques which may include molding from diamond turned molds and may be coated with a reflective and/or protective coating or uncoated. When uncoated surfaces are employed, the substrate should be formed of a material which is highly reflective after being diamond turned, such as aluminum or copper alloys.

It is noted that for the sake of clarity in the drawings, no support structure has been shown for the folding mirror in the embodiments of Figs. 1, 2 and 7. Folding mirrors of this type may be mounted on blades or other narrow supports which minimize interference with the beam or may be defined by a reflective coating on a transparent substrate. The mounting and construction of the folding mirror is outside the scope of the present invention.

It is further noted that the apparatus of the invention may be located entirely or partially within the laser cavity of a laser.

It will be appreciated by persons skilled in the art that the present invention is not limited by what has been particularly shown and described hereinabove. Rather, the scope of the present invention is defined only by the claims which follow: the annex.

## ANNEX A   PAGE 1

```
10 MX=-1.0000001# :MZ=61 :DMOK=160!
12 PRINT "MX= ";MX;"MZ= ";MZ;"XO= ";MX/2;"DMKED= ";DMOKED
15 X=15
20 GOSUB 1210
22 PRINT "a="A;"b="B
25 PRINT "zsofipar=";Z
26 TZS=Z
30 ZZ3=Z
40 X=30!
50 GOSUB 1210
60 ZO=Z:XXO=30
62 TZM=Z
65 PRINT "zmedlpar=";Z
70 DD2=-MZ/(MX-45)
80 DD1=-(ZZ3-MZ)/(MX-15)
90 XMA=MX
100 ZMA=MZ
110 PRINT "xmif=";XMA;"zmif=";ZMA
112 PRINT "xstr="
114 INPUT XMA
115 DD=(DD2+DD1)/2
116 ZMA=MZ+DD1*(XMA-MX)
117 XMA=XMA-1:ZMA=ZMA
118 PRINT "xstart=";XMA;"zstart=";ZMA
120 LLO=SQR((MX-15)*(MX-15)+(MZ-ZZ3)*(MZ-ZZ3))
122 EZT=ZMA:EXT=XMA
130 LL1=SQR((XMA-MX)*(XMA-MX)+(ZMA-MZ)*(ZMA-MZ))
139 REM 1 is the hitbadrut in radians
140 LL2=DMOK*LL1*100/(1*LLO)
150 ZZM=SQR((LL2*LL2)-(XMA*XMA))+ZMA
155 PRINT"zmoked=";ZZM
157 GOSUB 510
160 GOSUB 1500
165 AL=ATN(XM/(ZZM-ZM))*180/3.141592654#
166 PRINT "alfa=";AL;"xmiddle=";XM;"zmiddle=";ZM
167 EZM=ZM:EXM=XM
168 ZO=0:XXO=45:GOSUB 510:MR=ZZM-ZM
169 PRINT "xsofi=";XM;"zsofi=";ZM;"mrhk moked=";MR
170 EZS=ZM:EXS=XM
171 YO=ZM+5-ZOO:PRINT "yO=";YO
174 X=40!:GOSUB 1210
176 XXO=40!:ZO=Z:GOSUB 510
180 AMAX=ATN(XM/(ZZM-ZM))*180/3.14:XMAX=XM
181 X=17.5:GOSUB 1210
183 XXO=17.5:ZO=Z:GOSUB 510
185 AMIN=ATN(XM /(ZZM-ZM ))*180/3.14
```

‍‍‍‍‍‌‍‍‍‌‌‌‍‍‌‍‍‌‍‌‌‍‍‌‍‌‌‍‍‍‌‌‌‌‍‌‌‍‍‌‍‍‍ANNEX A PAGE 2

```
187 BETA=AMAX-AMIN
190 PRINT "alfamx=";AMAX;"alfamin=";AMIN;"beta=";BETA
192 PRINT "xmax= ";XMAX
194 PRINT "zpar=-a(x-mx)**2+(b+5)"
196 PRINT "zalips={-(x+x0)d1+sqrt[(x+x0)(x+x0)d2+d3]}/2+y0"
198 PRINT "z0=";Z01
300 PRINT "DO YOU WANT ALUMCON DATA SHEET?"
310 INPUT KK
320 IF KK<.5 GOTO 490
321 PRINT "INPUT THE DATE "
322 INPUT K1,K2,K3
330 LPRINT "                              ALUMCON DATA SHEET"
340 LPRINT "                              -------------------"
341 LPRINT
342 LPRINT
370 LPRINT "     ALUMCON NO.:                    DESIGNER:E. GOLDENBERG
372 LPRINT "     ALUMOR  NO.:                    DATE: ";K1;"-";K2;"-";K3
373 LPRINT
374 LPRINT
375 LPRINT "PAR."
377 LPRINT "ZSTART = ";TZT,,"XSTART = ";45!
380 LPRINT "ZMEDI  = ";TZM,"XMEDI  = ";30!
382 LPRINT "ZSOFI  = ";TZS,"XSOFI  = ";15!
385 LPRINT
386 LPRINT
390 LPRINT "ELLIPS."
391 LPRINT "ZSTART = ";EZT,"XSTART = ";EXT
393 LPRINT "ZMEDI  = ";EZM,"XMEDI  = ";EXM
395 LPRINT "ZSOFI  = ";EZS,"XSOFI  = ";EXS
396 LPRINT
397 LPRINT
400 LPRINT "MOKED"
401 LPRINT "ZMOK = ";MR
405 LPRINT "ALFAMAX = ";AMAX,"ALFAMIN = ";AMIN,"BETA = ";BETA
410 LPRINT
411 LPRINT
412 LPRINT "ALUMA"
413 LPRINT "XMAX = ";XMAX
420 LPRINT "* NOTE : Z-0 AT FIRST SURFACE OF MATERIAL."
421 LPRINT "----------------------------------------------------------------"
422 LPRINT
423 LPRINT
424 LPRINT "EQUATIONS:"
425 LPRINT "PAR."
430 LPRINT "Z = -A(X-MX)**2+(B+5)"
440 LPRINT "CONSTANTS : MX = ";MX,"A = ";A,"B = ";B
450 LPRINT
451 LPRINT "ELLIPS."
460 LPRINT "Z ={-(X+X0)D1+sqrt[(X+X0)(X+X0)D2+D3]}/2+Y0"
465 LPRINT "CONSTANTS : X0 = ";X0,"Y0 = ";Y0
470 LPRINT "            D1 = ";D1,"D2 = ";D2,"D3 = ";D3
474 LPRINT
475 LPRINT "* NOTES : 1. Z=0 5mm BEFORE MATERIAL'S SURFACE."
480 LPRINT "          2. Z POSITIVE ON EACH SIDE TOWORD THE MATERIAL."
490 END
```

10

ANNEX A PAGE 3

```
510 XO=XXO
520 X1=MX:Z1=MZ
530 X2=XMA:Z2=ZMA
540 X3=0:Z3=ZZM
550 K1=ATN((Z1-ZO)/(XO-X1))
560 K2=-ATN((Z3-Z1)/X1)-K1
570 K3=SQR((X2-X1)*(X2-X1)+(Z2-Z1)*(Z2-Z1))
580 K3=K3+SQR((X3-X2)*(X3-X2)+(Z3-Z2)*(Z3-Z2))
590 K4=SQR((X3-X1)*(X3-X1)+(Z3-Z1)*(Z3-Z1))
600 K5=(K3*K3-K4*K4)/(2*(K3-K4*COS(K2)))
610 XM=X1-K5*COS(K1):ZM=Z1+K5*SIN(K1)
650 RETURN
1210 MOKPZ=MZ
1220 MOKPX=MX
1230 XPAR=45
1240 ZPAR=0
1250 AA=4*(XPAR-MOKPX)*(XPAR-MOKPX)
1260 BB=4*(MOKPZ-ZPAR)
1270 A=(BB+SQR(BB*BB+4*AA))/(2*AA)
1280 B=MOKPZ+1/(4*A)
1320 Z=-A*(X-MOKPX)*(X-MOKPX)+B
1340 RETURN
1500 X1=-MX:Z1=MZ
1510 X2=-XMA:Z2=ZMA
1520 X3=0:Z3=ZZM
1530 ZO=(Z3+Z1)/2:XO=(X1+X3)/2:ZOO=ZO
1535 ZO1=ZO
1540 K1=SQR((X2-X1)*(X2-X1)+(Z2-Z1)*(Z2-Z1))
1550 K1=K1+SQR((X3-X2)*(X3-X2)+(Z3-Z2)*(Z3-Z2))
1560 K1=.25*K1*K1
1570 K2=K1-.25*((X3-X1)*(X3-X1)+(Z3-Z1)*(Z3-Z1))
1580 ALF=ATN((X1-X3)/(Z3-Z1))
1590 K3=COS(ALF):K4=SIN(ALF)
1600 K6=K3*K3*K2+K1*K4*K4
1610 D1=2*K4*K3*(K2-K1)/K6
1620 D2=D1*D1-4*(K3*K3*K1+K4*K4*K2)/K6
1630 D3=4*K1*K2/K6
1640 PRINT "d1=";D1;"d2=";D2;"d3=";D3
1660 X=-XMA
1670 XX=X-XO:Z=.5*(XX*D1-SQR(XX*XX*D2+D3))+ZO
1680 PRINT "z=";Z
1690 RETURN
```

## Claims

1. Apparatus for configuring radiation comprising:
a unitary optical substrate having formed thereon at least first and second optical surfaces, at least one of which is non-linear each having rotational symmetry, the first and second optical surfaces being defined in three dimensions by an analytical expression.

2. Apparatus for configuring radiation comprising a unitary optical substrate having formed thereon at least first and second optical surfaces, said optical substrate having formed therein an aperture permitting passage therethrough of radiation.

3. Apparatus for configuring radiation comprising at least first and second optical surfaces, said first and second optical surfaces having formed therein an aperture permitting passage therethrough of radiation.

4. Apparatus for configuring radiation comprising:
a unitary optical substrate having formed thereon at least first and second optical surfaces, at least one of which is non-linear, each having rotational symmetry about an axis of symmetry, said first and second optical surfaces being arranged such that radiation reflected from one of the first and second optical surfaces does not impinge on the other of the first and second optical surfaces at said axis of symmetry.

5. Apparatus according to claims 1, 2 or 3 and also comprising a folding mirror arranged for reflection of light passing through said aperture.

6. Apparatus according to claims 1 - 4, and wherein said folding mirror has optical power.

7. Apparatus according to claims 1-4, and wherein said folding mirror is flat.

8. Apparatus according to claims 1, 2 or 3, and wherein said aperture is arranged to be coaxial with the first and second optical surfaces.

9. Apparatus according to claims 2, 3 or 4, and wherein said first and second optical surfaces are coated.

10. Apparatus according to claims 2, 3 or 4, and being operative for collimating incoming radiation.

11. Apparatus according to claims 2, 3 or 4 and being operative for concentrating incoming radiation.

12. Apparatus according to claim 1 and wherein said optical substrate has formed therein an aperture permitting passage therethrough of radiation.

13. Apparatus according to claim 1 and wherein said first and second optical surfaces are characterized in that a section thereof taken in a plane passing through the axis of rotational symmetry is a curve selected from among elliptical, parabolic and hyperbolic curves.

14. Apparatus according to claim 13 and wherein said first and second optical surfaces are further characterized in that they are not paraboloid, ellipsoid or hyperboloid.

15. Apparatus according to claim 13 or claim 14 and wherein the sections of the first and second optical surfaces taken in a plane passing through their axis of rotational symmetry may be approximated by circular curves.

16. Apparatus according to claim 2 and wherein said first and second optical surfaces are defined in three dimensions by the numerical solutions to differential equations.

17. Apparatus according to claim 3 and wherein said first and second optical surfaces are defined in three dimensions by the numerical solutions to differential equations.

18. Apparatus according to claim 4 and wherein said first and second optical surfaces are defined in three dimensions by the numerical solutions to differential equations.

19. Apparatus according to claim 4 and also comprising a folding mirror.

FIG. 1

FIG. 2

FIG. 3

FIG. 4

FIG. 5

FIG. 6

FIG. 7